(19) Europäisches Patentamt
European Patent Office
Office européen des brevets

(11) **EP 2 945 748 B1**

(12) # EUROPÄISCHE PATENTSCHRIFT

(45) Veröffentlichungstag und Bekanntmachung des Hinweises auf die Patenterteilung:
**22.02.2017 Patentblatt 2017/08**

(21) Anmeldenummer: **13750664.8**

(22) Anmeldetag: **06.08.2013**

(51) Int Cl.:
**B02C 15/00** *(2006.01)*      **B02C 25/00** *(2006.01)*

(86) Internationale Anmeldenummer:
**PCT/EP2013/066474**

(87) Internationale Veröffentlichungsnummer:
**WO 2014/111174 (24.07.2014 Gazette 2014/30)**

(54) **VERFAHREN UND VORRICHTUNG ZUR REGELUNG EINER ROTATIONSGESCHWINDIGKEIT EINES ANTRIEBS**

METHOD AND DEVICE FOR CONTROLLING A ROTATIONAL SPEED OF A DRIVE

PROCÉDÉ ET DISPOSITIF DE RÉGULATION D'UNE VITESSE DE ROTATION D'UN ENTRAÎNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2013 DE 102013200578**

(43) Veröffentlichungstag der Anmeldung:
**25.11.2015 Patentblatt 2015/48**

(73) Patentinhaber: **Siemens Aktiengesellschaft 80333 München (DE)**

(72) Erfinder: **KUBE, Andreas 52078 Aachen (DE)**

(56) Entgegenhaltungen:
**EP-A2- 0 350 818      WO-A1-2010/015564
JP-A- S63 218 831**

EP 2 945 748 B1

**Beschreibung**

Die Erfindung betrifft ein Verfahren zur Regelung einer Rotationsgeschwindigkeit eines Antriebs, insbesondere Schwerlastantriebs, sowie eine nach dem Verfahren arbeitende Vorrichtung. Der Antrieb treibt eine Welle an und die Regelung der Rotationsgeschwindigkeit erfolgt mittels einer Regelungseinrichtung, welcher eine mit einem vorgegebenen oder vorgebbaren Sollwert für die Rotationsgeschwindigkeit und einem Istwert für die Rotationsgeschwindigkeit gebildete Regelabweichung zugeführt wird.

Vertikalmühlen zum Zerkleinern spröder Materialien, zum Beispiel Zementrohmaterial sind aus der WO 2010/015564 bekannt und neigen zu mitunter starken mechanischen Torsionsschwingungen im Antriebsstrang. Um diesen Torsionsschwingungen auf regelungstechnischem Wege begegnen zu können, ist zur Ansteuerung eines eine solche Mühle antreibenden Schwerlastantriebs eine genaue Information über den aktuellen Rotationswinkel oder eine seiner zeitlichen Ableitungen, also zum Beispiel die Rotationsgeschwindigkeit, an mindestens einer Stelle des Antriebsstrangs erforderlich. Zur Messwertaufnahme kommt zum Beispiel der Rotor des Motors in Betracht. Herkömmliche Drehwinkelgeber basieren darauf, dass mittels einer Abtasteinheit eine Relativbewegung einer Maßverkörperung erfasst wird. Die Abtasteinheit ist dabei in geeigneter Art und Weise ortsfest und die Maßverkörperung zum Beispiel am Umfang einer Welle angebracht.

Die Genauigkeit einer solchen Messung, zum Beispiel einer Messung der Rotationsgeschwindigkeit, leidet allerdings darunter, dass sich eine Relativbewegung zwischen Maßverkörperung und Abtasteinheit aus einer Überlagerung verschiedener Bewegungsanteile zusammensetzt. In der Praxis können dies Bewegungsanteile aufgrund eines Spiels oder sonstiger Unregelmäßigkeiten der Wellenlagerung, aufgrund einer Durchbiegung der Welle, aufgrund einer Unrundheit, Ovalität oder einer umlaufenden Exzentrizität der Welle sowie aufgrund von Montage- oder Fertigungsungenauigkeiten der Maßverkörperung sein.

Bei einer Regelung der Rotationsgeschwindigkeit der Welle sind außer der Rotation alle anderen Bewegungsanteile als Störanteile zu betrachten. Ein ungenaues Messsignal führt zwangsläufig zu einer schlechten Regelgüte. Speziell wenn ein Störanteil eine Periodizität aufweist, zum Beispiel ein Störanteil aufgrund einer Exzentrizität der Maßverkörperung, kann dies zu erheblichen Problemen führen. Wenn der periodische Störanteil mit mindestens einem seiner Spektrallinienanteile eine Eigenfrequenz des geregelten Systems trifft, kann dies eine Resonanz anfachen.

Weil bisher Vertikalmühlenantriebe und andere Schwerlastantriebe noch nicht hochdynamisch geregelt werden, hat dieses Problem bislang keine Rolle gespielt und ist entsprechend nach bestem Wissen des Erfinders nicht untersucht worden.

Eine Aufgabe der Erfindung besteht darin, eine Möglichkeit zur Messung der Rotationsgeschwindigkeit anzugeben, welche die oben skizzierten Resonanzgefahren vermeidet.

Diese Aufgabe wird erfindungsgemäß mit einem Verfahren zur Regelung einer Rotationsgeschwindigkeit eines Antriebs, insbesondere Schwerlastantriebs, wobei der Antrieb eine Welle antreibt, also in Rotation versetzt, und die Regelung der Rotationsgeschwindigkeit mittels einer Regelungseinrichtung erfolgt, wobei der Regelungseinrichtung eine mit einem vorgegebenen oder vorgebbaren Sollwert für die Rotationsgeschwindigkeit und einem Istwert für die Rotationsgeschwindigkeit gebildete Regelabweichung zugeführt wird, dadurch gelöst, dass ein Istwert für einen Rotationswinkel der Welle oder eine seiner zeitlichen Ableitungen, insbesondere ein Istwert für die Rotationsgeschwindigkeit der Welle, an der Welle mittels eines ersten Sensors sowie mittels zumindest eines weiteren Sensors erfasst wird, und dass der Istwert für die Rotationsgeschwindigkeit anhand einer gewichteten Gesamtbetrachtung der einzelnen von dem ersten und dem mindestens einen weiteren Sensor erhaltenen Messwerte, insbesondere Rotationsgeschwindigkeitsmesswerte, gebildet wird.

Die mittelbare oder unmittelbare Erfassung der Rotationsgeschwindigkeit der Welle durch Erfassung eines Rotationswinkels der Welle oder einer der zeitlichen Ableitungen des Rotationswinkels sind äquivalente Ausführungsformen zum Erhalt eines zur Regelung der Rotationsgeschwindigkeit des Antriebs verwendbaren Messwerts. Um die Lesbarkeit des nachfolgenden Textes nicht unnötig zu erschweren, wird die weitere Beschreibung auf Basis einer Erfassung der Rotationsgeschwindigkeit fortgesetzt. Dies ist jedoch stets so zu lesen, dass mit den mindestens zwei Sensoren alternativ auch zum Beispiel jeweils ein Rotationswinkel gemessen werden und daraus durch zeitliche Ableitung die Rotationsgeschwindigkeit ermittelt werden kann oder dass zum Beispiel jeweils eine Rotationsbeschleunigung gemessen werden und daraus durch zeitliche Integration ebenfalls die Rotationsgeschwindigkeit ermittelt werden kann.

Die oben genannte Aufgabe wird gleichfalls mit einer Vorrichtung gelöst, die Mittel zu Ausführung des Verfahrens aufweist. Eine solche Vorrichtung zur Regelung einer Rotationsgeschwindigkeit eines Antriebs, insbesondere Schwerlastantriebs, bei der der Antrieb eine Welle antreibt, also in Rotation versetzt, und bei der zur Regelung einer Rotationsgeschwindigkeit eine Regelungseinrichtung vorgesehen ist, welcher eine mit einem vorgegebenen oder vorgebbaren Sollwert für die Rotationsgeschwindigkeit und einem Istwert für die Rotationsgeschwindigkeit gebildete Regelabweichung zuführbar ist, zeichnet sich dadurch aus, dass der Welle ein erster Sensor und zumindest ein weiterer Sensor jeweils zur Aufnahme eines Rotationsgeschwindigkeitsmesswerts der Welle zugeordnet sind und dass der Istwert der Rotationsgeschwindigkeit anhand einer gewichteten Gesamtbetrachtung der einzelnen von dem ersten und dem mindestens einen weiteren Sensor erhaltenen Rotationsgeschwindigkeitsmesswerten bildbar ist und im Betrieb der Vorrichtung zum Beispiel als arithmetisches Mittel gebildet wird.

Der Vorteil der Erfindung besteht darin, dass bei einer mehrfachen Aufnahme von Messwerten zur Rotationsgeschwindigkeit der Welle jeder Messwert zwar eventuelle periodische Störanteile umfasst, dass sich diese bei einer gewichteten Gesamtbetrachtung, zum Beispiel bei Bildung eines Mittelwerts, ganz oder zumindest teilweise aufheben.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform der Vorrichtung sind der erste Sensor und der oder jeder weitere Sensor in äquidistanter Anordnung entlang des Außenumfangs der Welle verteilt und der Istwert der Rotationsgeschwindigkeit ist als arithmetisches Mittel aus einzelnen von dem ersten und dem mindestens einen weiteren Sensor erhaltenen Rotationsgeschwindigkeitsmesswerten bildbar und wird im Betrieb der Vorrichtung als arithmetisches Mittel gebildet.

Ein arithmetisches Mittel oder ein arithmetischer Mittelwert ist eine besonders einfache Form eines Mittelwerts und kommt damit als besonders einfach implementierbare Form einer gewichteten Gesamtbetrachtung der einzelnen von dem ersten und dem mindestens einen weiteren Sensor erhaltenen Rotationsgeschwindigkeitsmesswerte bevorzugt in Betracht.

Wenn die Vorrichtung neben dem ersten Sensor genau einen weiteren Sensor, also genau zwei Sensoren, umfasst und der weitere Sensor dem ersten Sensor an der Welle gegenüberliegend, insbesondere exakt gegenüberliegend, angeordnet ist, vereinfacht sich die Bildung des arithmetischen Mittels entsprechend der Anzahl der zu mittelnden Messwerte und als Istwert der Rotationsgeschwindigkeit ergibt sich die hälftige Summe der von den beiden Sensoren erhältlichen Messwerte. Zudem ist eine an der Welle exakt gegenüberliegende oder zumindest näherungsweise exakt gegenüberliegende Anordnung der beiden Sensoren verhältnismäßig leicht realisierbar.

Der hier zur Verwendung für Schwerlastantriebe, insbesondere Antriebe wie sie in einer Vertikalmühle zum Beispiel zur Zerkleinerung von Zementrohmaterial vorgesehen sind, vorgestellte Ansatz kommt grundsätzlich auch für Antriebe anderer Art in Betracht. Insoweit ist die Erfindung damit auch ein Verfahren zur Kompensation von Störungen bei der Erfassung einer Rotationsgeschwindigkeit einer Welle, wobei der Welle, insbesondere einer Welle eines Schwerlastantriebs, ein Sensor zugeordnet ist, wobei sich das Verfahren dadurch auszeichnet, dass der Welle zumindest ein weiterer Sensor zugeordnet ist und dass ein Messwert für die Rotationsgeschwindigkeit der Welle als gewichtete Gesamtbetrachtung, insbesondere als arithmetisches Mittel aus einzelnen von dem ersten und dem mindestens einen weiteren Sensor erhaltenen Messwerten gebildet wird. Die Erfindung ist im weiteren damit auch eine korrespondierende Vorrichtung, nämlich zum Beispiel ein Rotationsgeschwindigkeitsaufnehmer, zur Kompensation von Störungen bei der Erfassung einer Rotationsgeschwindigkeit einer Welle , wobei die Vorrichtung einen der Welle, insbesondere einer Welle eines Schwerlastantriebs, zugeordneten Sensor umfasst und sich dadurch auszeichnet, dass die Vorrichtung zumindest einen weiteren der Welle zugeordneten Sensor umfasst und dass ein Messwert für die Rotationsgeschwindigkeit der Welle als gewichtete Gesamtbetrachtung, insbesondere als arithmetisches Mittel aus einzelnen von dem ersten und dem mindestens einen weiteren Sensor erhaltenen Messwerten bildbar ist. Für ein solches "verallgemeinertes" Verfahren und eine korrespondierende verallgemeinerte Vorrichtung kommen als spezielle Ausführungsformen alle für das Verfahren und die Vorrichtung zur Regelung einer Rotationsgeschwindigkeit eines Antriebs, insbesondere Schwerlastantriebs, beschriebenen Ausführungsformen in Betracht.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Tatsächlich sind im Rahmen der vorliegenden Offenbarung auch Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen

FIG 1   eine schematisch stark vereinfachte Darstellung einer Vertikalmühle mit einer mittels eines Schwerlastantriebs angetriebenen Welle, mittels derer ein Mahlteller der Vertikalmühle in Rotation versetzt wird,

FIG 2 und

FIG 3 in einer schematisch vereinfachten Draufsicht eine Exzentrizität bzw. eine Schwingung einer Welle zur Erläuterung der daraus resultierenden Fehler bei einer messtechnischen Erfassung der Rotationsgeschwindigkeit der Welle,

FIG 4 eine Anordnung mit einem ersten und zumindest einem weiteren Sensor zur Erfassung der Rotationsgeschwindigkeit der Welle gemäß dem hier vorgeschlagenen Ansatz sowie

FIG 5 eine schematisch vereinfachte Darstellung einer Vorrichtung zur Kompensation von Störungen bei der Erfassung einer Rotationsgeschwindigkeit einer Welle gemäß dem hier vorgeschlagenen Ansatz.

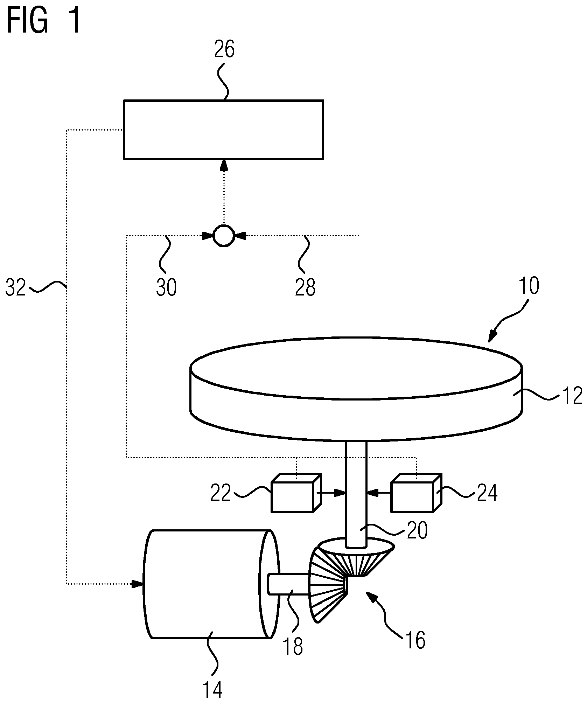

Die Darstellung in FIG 1 zeigt schematisch stark vereinfacht eine Vertikalmühle 10 zum Zerkleinern spröder Materialien, zum Beispiel Zementrohmaterial. Die Vertikalmühle 10 umfasst einen um die Vertikale drehbaren Mahlteller 12. Der Antrieb des Mahltellers 12 erfolgt mittels eines Motors, insbesondere eines Elektromotors 14, und im hier gezeigten Beispiel mittels eines zwischen Elektromotor 14 und Mahlteller 12 befindlichen Getriebes 16. Das Getriebe 16 ist hier ohne Verzicht auf eine weitergehende Allgemeingültigkeit als Kegelradverzahnung gezeigt. Das Getriebe 16 kann auch eine solche Kegelradverzahnung oder dergleichen und ein vorgeschaltetes oder anschließendes Planetengetriebe umfassen.

Die Vertikalmühle 10 umfasst zumindest eine angetriebene Welle 18, 20. In der Darstellung in FIG 1 umfasst die Vertikalmühle 10 eine Motorwelle 18 und eine Mahltellerwelle 20. Sämtliche Mittel zur Übertragung der Antriebskraft des Elektromotors 14 auf den Mahlteller 12 werden als Antriebsstrang bezeichnet. Hier gehören zum Antriebsstrang der Elektromotor 14, die Motorwelle 18, das Getriebe 16 und die Mahltellerwelle 20.

Die Vertikalmühle 10 ist insgesamt ein schwingfähiges System. Im Betrieb der Vertikalmühle 10 versetzt der Elektromotor 14 den Mahlteller 12 in Rotation. Die oder jede Welle 18, 20 sowie das Getriebe 16 zeichnen sich durch eine gewisse mechanische Elastizität aus, so dass sich innerhalb der Vertikalmühle 10 Torsionsschwingungen ausbilden können. Im Betrieb der Vertikalmühle 10 ist allerdings eine möglichst konstante Drehzahl oder Rotationsgeschwindigkeit des Mahltellers 12 erforderlich. Deshalb wird die Rotationsgeschwindigkeit des Mahltellers 12 mittelbar oder unmittelbar erfasst und für eine Regelung der Rotationsgeschwindigkeit des Mahltellers 12 oder für eine Regelung der Drehzahl des Elektromotors 14 verwendet.

Dafür ist zumindest ein entsprechender Sensor 22, 24 vorgesehen. In der in FIG 1 gezeigten Ausführungsform ist der Sensor 22, 24 der Mahltellerwelle 20 zugeordnet und erfasst entsprechend deren Rotationsgeschwindigkeit. Die Mahltellerwelle 20 wird im Folgenden kurz nur als Welle 20 bezeichnet.

Zur Regelung der Rotationsgeschwindigkeit ist eine Regelungseinrichtung 26 vorgesehen. Dieser wird in an sich bekannter Art und Weise eine mit einem vorgegebenen oder vorgebbaren Sollwert 28 für die Rotationsgeschwindigkeit und einem Istwert 30 für die Rotationsgeschwindigkeit gebildete Regelabweichung zugeführt. Die Regelungseinrichtung 26 gibt auf Basis der Regelabweichung in ebenfalls an sich bekannter Art und Weise eine Stellgröße 32 zur Ansteuerung des Elektromotors 14 aus.

Die Darstellung in FIG 1 zeigt bereits einen Sensor 22 und zumindest einen weiteren Sensor 24, wie dies hier vorgeschlagen wird. Herkömmlich wird zur Erfassung der Rotationsgeschwindigkeit ein einzelner Sensor 22 verwendet, so dass die weitere Beschreibung zunächst von einem einzelnen Sensor 22 und einer Erfassung der Rotationsgeschwindigkeit mit einem einzelnen Sensor 22 ausgeht.

Die Erfassung der Rotationsgeschwindigkeit an der Mahltellerwelle 20 (oder alternativ direkt am Mahlteller 12) hat den Effekt, dass auch eventuelle Rotationsgeschwindigkeitsabweichungen aufgrund von Schwingungen unmittelbar erfasst werden. Die erfasste Rotationsgeschwindigkeit kann dann für eine besonders genaue Regelung der Rotationsgeschwindigkeit des Mahltellers 12 verwendet werden. Die Beschreibung wird hier aus Gründen der Vereinfachung auf Basis der Darstellung in FIG 1 für eine Messwertaufnahme an der Mahltellerwelle 20 fortgesetzt. Es versteht sich, dass dieselbe Messwertaufnahme auch in Bezug auf die Motorwelle 18 erfolgen kann, ohne dass darauf jeweils im Einzelnen hingewiesen ist. Die alternative Möglichkeit zur Messwertaufnahme an der Motorwelle 18 ist dementsprechend bei der nachfolgenden Beschreibung stets mitzulesen.

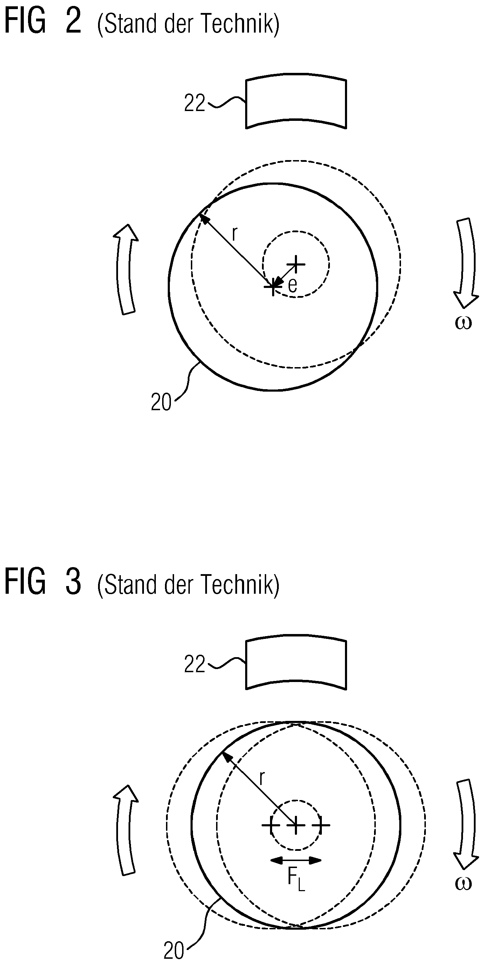

Die Darstellung in FIG 1 zeigt keine Lager und dergleichen. Solche Lager sind selbstverständlich vorhanden. Dennoch kann sich im Betrieb der Vertikalmühle 10 eine Exzentrizität der Welle 20 oder auch eine Schwingung der Welle 20 in radialer Richtung ergeben. Die Darstellungen in FIG 2 und FIG 3 zeigen dies in schematisch vereinfachter Darstellung anhand eines Querschnitts durch die Welle 20.

Die Darstellung in FIG 2 zeigt die Situation bei einer Exzentrizität der Welle 20. Der mit einer durchgezogenen Linie dargestellte Kreis stellt eine Momentaufnahme einer Position der exzentrischen Welle 20 dar. Ein erster mit einer gestrichelten Linie dargestellter (größerer) Kreis stellt eine Position der Welle 20 ohne Exzentrizität dar. Ein mit einer gestrichelten Linie dargestellter zweiter kleinerer Kreis zeigt die Spur des wandernden Ortes des Mittelpunkts der exzentrischen Welle 20.

Es versteht sich, dass bei einer Erfassung der Rotationsgeschwindigkeit der Welle 20 mittels eines Sensors 22 bei einer Exzentrizität der Welle 20 der ermittelte Messwert für die Rotationsgeschwindigkeit fehlerbehaftet ist.

Die Darstellung in FIG 3 zeigt exemplarisch die Verhältnisse bei einer in radialer Richtung schwingenden Welle 20. Der mit einer durchgezogenen Linie dargestellte Kreis und die beiden mit gestrichelten Linien dargestellten Kreise mit gleichen Radien stellen beispielhaft Momentaufnahmen von horizontal möglichen Positionen der schwingenden Welle 20 dar. Ein weiterer, innerer Kreis stellt eine Grenzlinie für den Bereich des wandernden Ortes des Mittelpunkts der exzentrischen Welle 20 dar.

Auch hier versteht sich, dass bei einer Erfassung der Rotationsgeschwindigkeit der Welle 20 mittels eines Sensors 22 bei einer schwingenden Welle 20 der ermittelte Messwert für die Rotationsgeschwindigkeit fehlerbehaftet ist.

In der Praxis können eine Exzentrizität der Welle 20 wie auch eine Schwingung der Welle 20 auch in Kombination vorkommen, so dass sich die dargestellten Effekte addieren.

Für eine hochgenaue Regelung der Rotationsgeschwindigkeit des Mahltellers 12 oder der Drehzahl des Elektromotors 14 ist ein entsprechend genauer Messwert für die momentane Rotationsgeschwindigkeit des Mahltellers 12 (Istwert 30 der Rotationsgeschwindigkeit) von entscheidender Bedeutung. Speziell bei einer Exzentrizität der Welle 20 und/oder einer Schwingung der Welle 20 kommt hinzu, dass nicht nur der Istwert 30 fehlerbehaftet ist, sondern dass der Fehler eine Periodizität aufweist. Eine mit einem solchen mit einem periodischen Fehler behafteten Istwert 30 gebildete Regelung der Rotationsgeschwindigkeit des Mahltellers 12 birgt die Gefahr, das Gesamtsystem, also die Vertikalmühle 10, zu Schwingungen anzuregen, welche zumindest in Resonanzlage für die Anlage schadhafte Auswirkungen haben können.

Für die in FIG 2 dargestellten Verhältnisse gelten folgende Zusammenhänge:

Ein in Bezug auf eine auf der Mantelfläche der Welle 20 angebrachte Maßverkörperung gemessener Weg *s* ist von der jeweiligen Drehzahl $\omega$, der Zeit *t* und dem Radius *r* der Welle abhängig:

$$s = \omega t \cdot r$$

Bei einer Exzentrizität *e* der Welle 20 wird aufgrund der Exzentrizität zusätzlich ein periodischer Fehleranteil $F_E$ gemessen:

$$s = \omega t \cdot r + F_E$$

mit

$$F_E = \sin(\omega t) \cdot \left(1 - \frac{r+e}{r}\right)$$

Die jeweilige Umfangsgeschwindigkeit ergibt sich dann als erste zeitliche Ableitung des gemessenen Wegs:

$$v = \frac{ds}{dt} = \omega \cdot \left( r + \cos(\omega t) \cdot \left[1 - \frac{r+e}{r}\right]\right)$$

Die so gemessene Umfangsgeschwindigkeit, die also herkömmlich als Istwert 30 für die Rotationsgeschwindigkeit der Welle 20 verwendet und anschließend für eine Regelung der Rotationsgeschwindigkeit der Welle 20 verwendet würde, umfasst den folgenden periodischen Anteil:

$$\cos(\omega t) \cdot \left(1 - \frac{r+e}{r}\right)$$

Übliche Antriebsdrehzahlen einer Vertikalmühle 10 liegen im Bereich von 780 U/min bis 1.100 U/min. Diese Drehzahlen entsprechen Rotationsfrequenzen von ω = 13 Hz bis ω ≈ 18 Hz. Dies ist auch die Frequenz des o.g. periodischen Anteils der gemessenen Umfangsgeschwindigkeit oder des periodischen Fehleranteils $F_E$. Auf der anderen Seite liegen typische Eigenfrequenzen des Antriebsstrangs einer Vertikalmühle 10 ebenfalls in diesem Bereich und würden durch einen solchen Messfehler zum Schwingen angeregt. Dies liegt daran, dass für die Regelung tatsächliche Schwankungen der Rotationsgeschwindigkeit der Welle nicht von dem in dem gemessenen Istwert 30 für die Rotationsgeschwindigkeit enthaltenen periodischen Fehler unterscheidbar ist und die Regelung entsprechend versucht, den periodischen Fehler auszuregeln. Aufgrund der Überlappung des Rotationsfrequenzbereichs und des Eigenfrequenzbereichs ergibt sich dabei, dass die Regelung solche Schwankungen verstärkt und damit eine Resonanz anfacht.

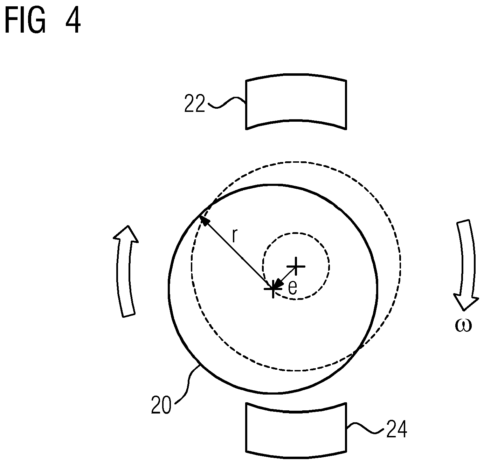

Die Darstellung in FIG 4 zeigt in schematisch vereinfachter Art und Weise das Prinzip der hier vorgeschlagenen Lösung. Genau wie herkömmlich (FIG 2, FIG 3) ist der Welle 20 ein Sensor 22 zugeordnet, der zur Unterscheidung als erster Sensor 22 bezeichnet wird. Neben diesem ersten Sensor 22 ist der Welle 20 zumindest ein weiterer Sensor 24 zugeordnet (vergleiche auch die Darstellung in FIG 1). Jeder Sensor 22, 24 liefert einen - eventuell fehlerbehafteten - Messwert für die Rotationsgeschwindigkeit der Welle 20. Bei Annahme eines Messfehlers aufgrund einer Exzentrizität der Welle 20 und der gezeigten Anbringung der Sensoren 22, 24 ergeben sich mit den zuvor schon erläuterten Zusammenhängen folgende von den beiden Sensoren 22, 24 gelieferte Messwerte:

$$v_1 = \omega \cdot \left( r + \cos(\omega t) \cdot \left[ 1 - \frac{r+e}{r} \right] \right),$$

$$v_2 = \omega \cdot \left( r + \cos(\omega t + \pi) \cdot \left[ 1 - \frac{r+e}{r} \right] \right) = \omega \cdot \left( r - \cos(\omega t) \cdot \left[ 1 - \frac{r+e}{r} \right] \right).$$

Man erkennt folglich, dass sich bei einer Addition von v1 und v2 die beiden in den Messwerten enthaltenen periodischen Anteile genau aufheben.

Entsprechend liefert

$$v = \frac{v_1 + v_2}{2} = \omega \cdot r$$

genau die tatsächliche, fehlerfreie Rotationsgeschwindigkeit der Welle 20. Ein auf diese Weise gebildeter Istwert 30 für die Rotationsgeschwindigkeit der Welle 20 kann für eine Regelung der Rotationsgeschwindigkeit der Welle 20 und auch für eine hochdynamische Regelung der Rotationsgeschwindigkeit der Welle 20 verwendet werden, ohne dass zu besorgen wäre, dass Exzentrizitätsfehler und dergleichen zu einer unerwünschten Schwankung der Drehzahl der Welle oder gar zu einem Aufschwingen des Gesamtsystems führen.

Anstelle genau zweier Sensoren 22, 24, die an der Welle 20 einander gegenüberliegend angeordnet sind (FIG 4), kommt auch die Verwendung von mehr als zwei Sensoren (nicht dargestellt) in Betracht. Jedenfalls sind zwei oder mehr Sensoren 22, 24, also ein erster Sensor 22 und jeder weitere Sensor 24, in äquidistanter Anordnung entlang des Außenumfangs der Welle 20 verteilt und der Istwert 30 der Rotationsgeschwindigkeit ergibt sich als arithmetisches Mittel aus einzelnen von dem ersten und dem mindestens einen weiteren Sensor 22, 24 erhaltenen Rotationsgeschwindigkeitsmesswerten:

$$v = \frac{v_1 + \ldots + v_n}{n} = \omega \cdot r$$

Bei der äquidistanten Anordnung entlang des Umfangs der Welle 20 befinden sich zwei Sensoren 22, 24 in einem Abstand von 360°/2 = 180°, drei Sensoren in einem Abstand von 360°/3 = 120° und n Sensoren entsprechend in einem Abstand von 360°/n.

Die hier beschriebene Bildung des arithmetisches Mittels einzelner von dem ersten und dem mindestens einen weiteren Sensor 22, 24 erhaltener Rotationsgeschwindigkeitsmesswerte ist ein Bespiel für eine gewichtete Gesamtbetrachtung der einzelnen von dem ersten und dem mindestens einen weiteren Sensor 22, 24 erhaltenen Rotationsgeschwindigkeitsmesswerte, denn bei der Bildung des arithmetischen Mittels werden alle Rotationsgeschwindigkeitsmesswerte gleichgewichtet und die Gesamtbetrachtung erfolgt, indem die Summe aller Rotationsgeschwindigkeitsmesswerte durch die Anzahl der Rotationsgeschwindigkeitsmesswerte dividiert wird.

Für die in FIG 3 (radiale Schwingung der Welle 20) gezeigten Verhältnisse gilt das oben Gesagte entsprechend. Der jeweilige Fehler resultiert dort aus einer andersartigen Lageabweichung der Welle 20, also zum Beispiel einem Lagerspiel oder einer Durchbiegung, und wird zur Unterscheidung von dem Exzentrizitätsfehler $F_E$ mit $F_L$ bezeichnet:

$$s = \omega t \cdot r + F_L$$

Der Fehler $F_L$ ist im Wesentlichen eine zufällige Größe und die Rotationsgeschwindigkeit ergibt sich als

$$v = \frac{ds}{dt} = \omega \cdot r + \frac{dF_L}{dt}$$

wobei die zeitliche Ableitung des Fehlers $F_L$ ein Rauschen ist, dessen maximale Frequenz sich aus der Dauer des Abtastintervalls ergibt. Bei einem Abtastintervall von zum Beispiel $250\mu s$ ergibt sich ein Rauschspektrum bis 2 kHz. Daraus kann eine breitbandige Anregung des Gesamtsystems resultieren. Auch ein solcher Fehler wird durch mindestens einen weiteren Sensor 24 neben dem ersten Sensor 22 und die gewichtete Gesamtbetrachtung von zwei oder mehr von dem ersten und zumindest einem weiteren Sensor 22, 24 gelieferten Geschwindigkeitsmesswerten kompensiert.

Die Bildung des arithmetischen Mittels oder jede sonst geeignete gewichtete Gesamtbetrachtung von zwei oder mehr von einem ersten und zumindest einem weiteren Sensor 22, 24 gelieferten Geschwindigkeitsmesswerten bewirkt also eine Kompensation von Störungen, zum Beispiel Störungen aufgrund von Schwingungen und/oder Exzentrizität - wie oben beschrieben -, bei der Erfassung einer Rotationsgeschwindigkeit einer Welle 20. Entsprechend können ein erster und zumindest ein weiterer Sensor 22, 24 auch in einer Vorrichtung zur Kompensation von Störungen bei der Erfassung einer Rotationsgeschwindigkeit einer Welle 20 zusammengefasst werden.

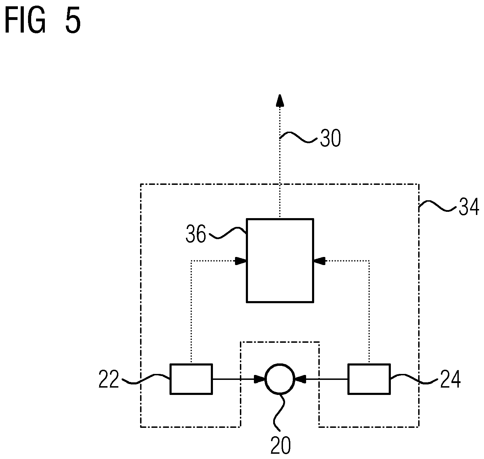

Die Darstellung in FIG 5 zeigt eine schematisch vereinfachte Darstellung einer solchen Vorrichtung 34. Diese umfasst neben dem ersten und zumindest einem weiteren Sensor 22, 24 eine Geschwindigkeitsmesswertermittlungseinheit 36. Diese führt aufgrund einer Implementation in Soft-, Hard- und/oder Firmware eine gewichtete Gesamtbetrachtung der von den einzelnen Sensoren 22, 24 erhältlichen Messwerte durch. Zum Beispiel führt die Geschwindigkeitsmesswertermittlungseinheit 36 die gewichtete Gesamtbetrachtung der Einzelmesswerte aus, indem das arithmetische Mittel der Einzelmesswerte gebildet wird. Als Ergebnis wird ein fehlerbereinigter Istwert 30 für den Geschwindigkeitsmesswert ausgegeben.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Verfahren und eine korrespondierende Vorrichtung zur Regelung einer Rotationsgeschwindigkeit eines eine Welle 20 antreibenden Antriebs, wobei die Regelung der Rotationsgeschwindigkeit mittels einer Regelungseinrichtung 26 erfolgt, welcher eine mit einem Sollwert 28 und einem Istwert 30 für die Rotationsgeschwindigkeit gebildete Regelabweichung zugeführt wird, wobei der Istwert 30 für die Rotationsgeschwindigkeit der Welle 20 an der Welle 20 mittels eines ersten Sensors 22 und zumindest eines weiteren Sensors 24 erfasst wird und wobei der Istwert 30 anhand einer gewichteten Gesamtbetrachtung der einzelnen, von dem ersten und dem mindestens einen weiteren Sensor 22, 24 erhaltenen Rotationsgeschwindigkeitsmesswerte gebildet wird.

**Patentansprüche**

1. Verfahren zur Regelung einer Rotationsgeschwindigkeit eines Antriebs, insbesondere Schwerlastantriebs (14), wobei der Antrieb eine Welle (20) antreibt und die Regelung der Rotationsgeschwindigkeit mittels einer Regelungseinrichtung (26) erfolgt, welcher eine mit einem vorgegebenen oder vorgebbaren Sollwert (28) für die Rotationsgeschwindigkeit und einem Istwert (30) für die Rotationsgeschwindigkeit gebildete Regelabweichung zugeführt wird, **dadurch gekennzeichnet,**
**dass** der Istwert (30) für einen Rotationswinkel der Welle (20) oder einer seiner zeitlichen Ableitungen, insbesondere die Rotationsgeschwindigkeit der Welle (20), an der Welle (20) mittels eines ersten Sensors (22) und zumindest eines weiteren Sensors (24) erfasst wird und
**dass** der Istwert (30) für die Rotationsgeschwindigkeit anhand einer gewichteten Gesamtbetrachtung der einzelnen, von dem ersten und dem mindestens einen weiteren Sensor (22, 24) erhaltenen Messwerte, insbesondere Rotationsgeschwindigkeitsmesswerte, gebildet wird.

**2.** Vorrichtung zur Regelung einer Rotationsgeschwindigkeit eines Antriebs, insbesondere Schwerlastantriebs (14), wobei der Antrieb eine Welle (20) antreibt und zur Regelung einer Rotationsgeschwindigkeit eine Regelungseinrichtung (26) vorgesehen ist, welcher eine mit einem vorgegebenen oder vorgebbaren Sollwert (28) für die Rotationsgeschwindigkeit und einem Istwert (30) für die Rotationsgeschwindigkeit gebildete Regelabweichung zuführbar ist,
**dadurch gekennzeichnet,**
**dass** der Welle (20) ein erster Sensor (22) und zumindest ein weiterer Sensor (24) jeweils zur Aufnahme eines Rotationswinkels der Welle (20) oder einer seiner zeitlichen Ableitungen, insbesondere eines Rotationsgeschwindigkeitsmesswerts der Welle (20), zugeordnet sind und
**dass** der Istwert (30) der Rotationsgeschwindigkeit anhand einer gewichteten Gesamtbetrachtung der einzelnen, von dem ersten und dem mindestens einen weiteren Sensor (22, 24) erhaltenen Messwerte, insbesondere Rotationsgeschwindigkeitsmesswerte, bildbar ist.

**3.** Vorrichtung nach Anspruch 2, wobei der erste Sensor (22) und der oder jeder weitere Sensor (24) in äquidistanter Anordnung entlang des Außenumfangs der Welle (20) verteilt sind und der Istwert (30) der Rotationsgeschwindigkeit als arithmetisches Mittel aus einzelnen von dem ersten und dem mindestens einen weiteren Sensor (22, 24) erhaltenen Rotationsgeschwindigkeitsmesswerten bildbar ist.

**4.** Vorrichtung nach Anspruch 3, wobei neben dem ersten Sensor (22) genau ein weiterer Sensor (24) vorgesehen ist und wobei der weitere Sensor (24) dem ersten Sensor (22) an der Welle (20) gegenüberliegend, insbesondere exakt gegenüberliegend, angeordnet ist.

**5.** Verfahren zur Kompensation von Störungen bei der Erfassung einer Rotationsgeschwindigkeit einer Welle (20), wobei der Welle (20), insbesondere einer Welle (20) eines Schwerlastantriebs (14), ein Sensor (22) zugeordnet ist,
**dadurch gekennzeichnet,**
**dass** der Welle (20) zumindest ein weiterer Sensor (24) zugeordnet ist und
**dass** ein Messwert für die Rotationsgeschwindigkeit der Welle (20) als arithmetisches Mittel aus einzelnen von dem ersten und dem mindestens einen weiteren Sensor (22, 24) erhaltenen Messwerten gebildet wird.

**6.** Vorrichtung (34) zur Kompensation von Störungen bei der Erfassung einer Rotationsgeschwindigkeit einer Welle (20), wobei die Vorrichtung einen der Welle (20), insbesondere einer Welle (20) eines Schwerlastantriebs (14), zugeordneten Sensor (22) umfasst,
**dadurch gekennzeichnet,**
**dass** die Vorrichtung zumindest einen weiteren, der Welle (20) zugeordneten Sensor (24) umfasst und
**dass** ein Messwert für die Rotationsgeschwindigkeit der Welle (20) als arithmetisches Mittel aus einzelnen von dem ersten und dem mindestens einen weiteren Sensor (22, 24) erhaltenen Messwerten bildbar ist.

**Claims**

**1.** Method for controlling a rotational speed of a drive, especially a heavy-duty drive (14), wherein the drive drives a shaft (20) and the rotational speed is controlled by means of a control device (26) which is supplied with a control deviation calculated from a predetermined or predeterminable desired value (28) for the rotational speed and an actual value (30) for the rotational speed,
**characterised in that**
the actual value (30) for an angle of rotation of the shaft (20) or one of its temporal derivations, especially the rotational speed of the shaft (20), is detected at the shaft (20) by means of a first sensor (22) and at least one further sensor (24) and that
the actual value (30) for the rotational speed is formed on the basis of a weighted overall view of the individual measured values obtained from the first and the at least one further sensor (22, 24), especially measured rotational speed values.

**2.** Device for controlling a rotational speed of a drive, especially a heavy-duty drive (14), wherein the drive drives a shaft (20) and a control device (26) is provided for controlling a rotational speed, to which a control deviation calculated with a predetermined or predeterminable desired value (28) for the rotational speed and an actual value (30) for the rotational speed is able to be supplied,

**characterised in that**
the shaft (20) is assigned a first sensor (22) and at least one further sensor (24), each for recording an angle of rotation of the shaft (20) or one of its temporal derivations, especially a rotational speed measured value of the shaft (20), and that

the actual value (30) of the rotational speed is able to be formed on the basis of a weighted overall view of the individual measured values, especially measured rotational speed values, obtained from the first and the at least one further sensor (22, 24).

3. Device according to claim 2, wherein the first sensor (22) and the or each further sensor (24) are distributed in an equidistant arrangement along the outer circumference of the shaft (20) and the actual value (30) of the rotational speed is able to be formed as the arithmetic mean from individual measured rotational speed values obtained from the first and the at least one further sensor (22, 24).

4. Device according to claim 3, wherein, as well as the first sensor (22), precisely one further sensor (24) is provided and wherein the further sensor (24) is disposed opposite the first sensor (22) on the shaft (20), especially exactly opposite it.

5. Method for compensating for faults in the detection of a rotational speed of a shaft (20), wherein the shaft (20), especially a shaft (20) of a heavy-duty drive (14), is assigned a sensor (22),
**characterised in that**
the shaft (20) is assigned at least one further sensor (24) and that
a measured value for the rotational speed of the shaft (20) is formed as an arithmetic mean from individual measured values obtained from the first and the at least one further sensor (22, 24).

6. Device (34) for compensating for faults in the detection of a rotational speed of a shaft (20), wherein the device includes a sensor (22) assigned to the shaft (20) especially a shaft (20) of a heavy-duty drive (14),
**characterised in that**
the device comprises at least one further sensor (24) assigned to the shaft (20) and that
a measured value for the rotational speed of the shaft (20) is able to be formed as an arithmetic mean from individual measured values obtained from the first and the at least one further sensor (22, 24).

**Revendications**

1. Procédé de régulation d'une vitesse de rotation d'un entraînement, notamment d'un entraînement ( 14 ) de charge lourde, dans lequel l'entraînement entraîne un arbre ( 20 ) et la régulation de la vitesse de rotation s'effectue au moyen d'un dispositif ( 26 ) de régulation auquel est envoyé une valeur ( 28 ) de consigne de la vitesse de rotation donnée à l'avance ou pouvant l'être et une valeur ( 30 ) réelle d'un écart de régulation formé pour la vitesse de rotation,
**caractérisé**
**en ce qu'**on détecte sur l'arbre ( 20 ), au moyen d'un premier capteur ( 22 ) et d'au moins un autre capteur ( 24 ), la valeur ( 30 ) réelle d'un angle de rotation de l'arbre ( 20 ) ou de l'une de ses dérivées en fonction du temps et
**en ce que** l'on forme la valeur ( 30 ) réelle de la vitesse de rotation à l'aide d'une considération d'ensemble pondérée des diverses valeurs de mesure, notamment des valeurs de mesure de vitesse de rotation, obtenues par le premier et par au moins un autre capteur ( 22, 24 ).

2. Dispositif de régulation d'une vitesse de rotation d'un entraînement, notamment d'un entraînement ( 14 ) de charge lourde, dans lequel l'entraînement entraîne un arbre ( 20 ) et est pourvu, pour la régulation d'une vitesse de rotation d'un dispositif ( 26 ) de régulation auquel peut être envoyée une valeur ( 28 ) de consigne de la vitesse de rotation donnée à l'avance ou pouvant l'être et une valeur ( 30 ) réelle d'un écart de régulation formé pour la vitesse de rotation,
**caractérisé**
**en ce qu'**à l'arbre ( 20 ) est associé un premier capteur ( 22 ) et au moins un autre capteur ( 24 ) respectivement pour l'enregistrement d'un angle de rotation de l'arbre ( 20 ) ou de l'une de ses dérivées en fonction du temps, notamment d'une valeur de mesure de la vitesse de rotation de l'arbre ( 20 ) et
**en ce que** la valeur ( 30 ) réelle de la vitesse de rotation peut être formée à l'aide d'une considération globale pondérée des diverses valeurs de mesure, notamment des valeurs de mesure de vitesse de rotation, obtenues par le premier et par le au moins un autre capteur ( 22, 24 ).

3. Dispositif suivant la revendication 2, dans lequel le premier capteur ( 22 ) et le ou chaque autre capteur ( 24 ) sont répartis de manière équidistante sur le pourtour extérieur de l'arbre ( 20 ) et la valeur ( 30 ) réelle de la vitesse de rotation peut être formée sous la forme d'une moyenne arithmétique des diverses valeurs de mesure de vitesse de rotation obtenues par le premier et le au moins un autre capteur ( 22, 24 ).

**4.** Dispositif suivant la revendication 3, dans lequel, outre le premier capteur ( 22 ), il est prévu exactement un autre capteur ( 24 ) et dans lequel l'autre capteur ( 24 ) est disposé en opposition au premier capteur ( 22 ) sur l'arbre ( 20 ), notamment en étant opposé exactement.

**5.** Procédé de compensation de perturbations lors de la détection d'une vitesse de rotation d'un arbre ( 20 ), un capteur ( 22 ) étant associé à l'arbre ( 20 ), notamment à un arbre ( 20 ) d'un entraînement ( 14 ) de charge lourde,
**caractérisé**
**en ce qu'**au moins un autre capteur ( 24 ) est associé à l'arbre ( 20 ) et
**en ce que** l'on forme une valeur de mesure de la vitesse de rotation de l'arbre ( 20 ) sous la forme d'une moyenne arithmétique à partir de diverses valeurs obtenues par le premier et le au moins un autre capteur ( 22, 24 ).

**6.** Dispositif ( 34 ) de compensation de perturbations lors de la détection d'une vitesse de rotation d'un arbre ( 20 ), le dispositif comprenant un capteur ( 22 ) associé à l'arbre ( 20 ), notamment à un arbre ( 20 ) d'un entraînement ( 14 ) de charge lourde,
**caractérisé**
**en ce que** le dispositif comprend au moins un autre capteur ( 24 ) associé à l'arbre ( 20 ) et
**en ce qu'**une valeur de mesure de la vitesse de rotation de l'arbre ( 20 ) peut être formée sous la forme d'une moyenne arithmétique à partir de diverses valeurs de mesure obtenues par le premier et le au moins un autre capteur ( 22, 24 ).

FIG 1

FIG 2 (Stand der Technik)

FIG 3 (Stand der Technik)

FIG 4

FIG 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010015564 A